# EUROPÄISCHE PATENTSCHRIFT

(11) **EP 3 033 780 B1**
(45) Veröffentlichungstag und Bekanntmachung des Hinweises auf die Patenterteilung: **03.01.2018**
(21) Anmeldenummer: 14749799.4
(22) Anmeldetag: 07.08.2014
(51) Int. Cl.: H01M 2/10

(54) **BATTERIEHALTEEINRICHTUNG**
BATTERY-RETAINING DEVICE
DISPOSITIF DE SUPPORT DE BATTERIE

(30) Priorität: 12.08.2013 DE 102013108735
(43) Veröffentlichungstag der Anmeldung: 22.06.2016
(73) Patentinhaber: Phoenix Contact GmbH & Co. KG, 32825 Blomberg (DE)
(72) Erfinder: SCHAEFERS, Thomas, 31812 Bad Pyrmont (DE); HANSES, Markus, 37671 Höxter (DE); HELLMICH, Dietmar, 32825 Blomberg (DE)
(74) Vertreter: Patentship Patentanwaltsgesellschaft mbH
(86) Internationale Anmeldenummer: PCT/EP2014/066959
(87) Internationale Veröffentlichungsnummer: WO 2015/022255

(56) Entgegenhaltungen:
- CN-U- 201 820 816
- JP-A- H0 948 297
- US-A- 3 017 598

## Beschreibung

Die vorliegende Erfindung betrifft eine Batteriehalteeinrichtung für eine oder mehrere Batterien mit einem Halterahmen zum Einsetzen der Batterie.

Die Druckschrift DE 100 54 323 A1 betrifft einen Batterie-Schwingungstilger, mit einer Aufnahmeeinrichtung für die Batterie, die in einer fahrzeugfesten Halterung mit Entkopplungselementen aufgehängt ist, wobei diese jeweils zwischen Wandungsbereichen der Aufnahmeeinrichtung und der Halterung angeordnet sind. Die Batterie ist von oben oder vorne in die Aufnahmeeinrichtung eingesetzt.

Die Druckschrift JP H09-048297 A betrifft eine Batterieladevorrichtung mit einem durch Wandungen gebildeten Halterahmen zum Einsetzen einer Batterie. Ferner weist die Batterieladevorrichtung eine Spanneinrichtung auf, mittels welcher die Batterie an dem Haltrahmen fixiert werden kann.

Die Druckschrift CN 201 820 816 U betrifft eine Batterieeinbauvorrichtung mit einem rahmenförmigen Sockel zur Aufnahme einer Batterie. Hierbei ist eine gewinkelte Platte vorgesehen, welche auf einer Kante der Batterie aufliegt.

Die Druckschrift US 3,017,598 A betrifft einen Halter für elektronische Komponenten, welcher einen Befestigungswinkel aufweist.

Es ist die der Erfindung zugrundeliegende Aufgabe, eine Batteriehalteeinrichtung anzugeben, aus der Batterien nicht herausrutschen können.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch eine Batteriehalteeinrichtung für eine oder mehrere Batterien mit einem Halterahmen zum Einsetzen der Batterie, einem Haltewinkel, der auf eine Kante der Batterie aufsetzbar ist, und einer Spanneinrichtung zum Einspannen der Batterie zwischen dem Halterahmen und dem Haltewinkel gelöst. Die Spanneinrichtung kann beispielsweise drehbar oder schwenkbar an dem Halterahmen befestigt sein. Dadurch wird beispielsweise der technische Vorteil erreicht, dass eine stabile Batteriehalterung für schwere Batterien erreicht wird, in der die Batterien gegen ein Umkippen, Herausfallen oder Verrutschen geschützt sind. Erfindungsgemäß umfasst die Spanneinrichtung einen Quergewindebolzen, der drehbar an dem Halterahmen befestigt oder montiert ist. Dadurch wird beispielsweise der technische Vorteil erreicht, dass der Haltewinkel flexibel auf eine Batteriekante aufgelegt werden kann.

In einer weiteren vorteilhaften Ausführungsform der Batteriehalteeinrichtung umfasst die Spanneinrichtung eine Speiche, die an dem Halterahmen befestigt ist. Dadurch wird beispielsweise der technische Vorteil erreicht, dass sich der Aufbau der Batteriehalteeinrichtung vereinfacht.

In einer vorteilhaften Ausführungsform der Batteriehalteeinrichtung umfasst der Quergewindebolzen oder die eine Speiche ein Schraubgewinde zum Einspannen der Batterie. Dadurch wird beispielsweise der technische Vorteil erreicht, dass die Batterie mit einer hohen Festigkeit mittels eines Schraubwerkzeugs eingespannt werden kann.

In einer weiteren vorteilhaften Ausführungsform der Batteriehalteeinrichtung umfasst der Halterahmen eine Rückwand und eine Bodenwand. Dadurch wird beispielsweise der technische Vorteil erreicht, dass die Batterie sowohl in rückseitiger Richtung als auch in der bodenseitigen Richtung durch den Halterahmen abgestützt wird.

In einer weiteren vorteilhaften Ausführungsform der Batteriehalteeinrichtung sind die Rückwand und die Bodenwand in einem rechten Winkel zueinander angeordnet. Dadurch wird beispielsweise der technische Vorteil erreicht, dass die Batteriehalteeinrichtung für kastenförmige Batterien geeignet ist.

In einer weiteren vorteilhaften Ausführungsform der Batteriehalteeinrichtung sind die Rückwand und die Bodenwand durch eine rechte und eine linke Seitenwand miteinander verbunden. Die Seitenwände sind beispielsweise dreiecksförmig. Dadurch wird beispielsweise der technische Vorteil erreicht, dass die Bodenwand und die Rückwand gegeneinander abgestützt sind, ohne dass der Haltewinkel behindert wird.

In einer weiteren vorteilhaften Ausführungsform der Batteriehalteeinrichtung ist in den Seitenwänden eine Einsatzöffnung zum Einsetzen der Spanneinrichtung gebildet. Dadurch wird beispielsweise der technische Vorteil erreicht, dass sich die Kraft beim Einspannen der Batterie effizient auf den Halterahmen übertragen lässt.

In einer weiteren vorteilhaften Ausführungsform der Batteriehalteeinrichtung sind in den Seitenwänden jeweils mehrere Einsatzöffnungen zum Einsetzen der Spanneinrichtung und Einspannen von Batterien unterschiedlicher Größe gebildet. Dadurch wird beispielsweise der technische Vorteil erreicht, dass Batterien unterschiedlicher Größe von der Batteriehalteeinrichtung aufgenommen werden können.

In einer weiteren vorteilhaften Ausführungsform der Batteriehalteeinrichtung umfasst der Haltewinkel einen Fensterabschnitt zum Befestigen einer Batterieelektronik. Dadurch wird beispielsweise der technische Vorteil erreicht, dass die Batterieelektronik an der gleichen Batteriehalteeinrichtung wie die Batterie befestigt werden kann.

In einer weiteren vorteilhaften Ausführungsform der Batteriehalteeinrichtung ist der Haltewinkel schwenkbar mittels der Spanneinrichtung an dem Halterahmen befestigt. Dadurch wird beispielsweise ebenfalls der technische Vorteil erreicht, dass Batterien unterschiedlicher Größe in der Batteriehalteeinrichtung befestigt werden können.

In einer weiteren vorteilhaften Ausführungsform der Batteriehalteeinrichtung umfasst der Halterahmen Fensteröffnungen. Dadurch wird beispielsweise der technische Vorteil erreicht, dass Material beim Herstellen der Halteinrichtung eingespart werden kann.

In einer weiteren vorteilhaften Ausführungsform der Batteriehalteeinrichtung ist der Halterahmen aus einem einzigen Teil gefertigt. Dadurch wird beispielsweise der technische Vorteil erreicht, dass der Halterahmen einfach und mit einer hohen Stabilität gefertigt werden kann.

In einer weiteren vorteilhaften Ausführungsform der Batteriehalteeinrichtung umfasst die Batteriehalteeinrichtung Befestigungsöffnungen zum Befestigen der Batteriehalteeinrichtung an einer Wand oder an einem Boden. Dadurch wird beispielsweise der technische Vorteil erreicht, dass der Halterahmen mit einer Wand oder einem Boden verschraubt werden kann, so dass ein Aufhängen der Batterie ermöglicht wird oder ein Umkippen verhindert wird.

In einer weiteren vorteilhaften Ausführungsform der Batteriehalteeinrichtung sind die Befestigungsöffnungen im Seitenbereich einer Rückwand gebildet. Dadurch wird beispielsweise der technische Vorteil erreicht, dass sich eine hohe Stabilität der Befestigung ergibt.

In einer weiteren vorteilhaften Ausführungsform der Batteriehalteeinrichtung sind der Halterahmen und/oder der Haltewinkel aus Metall oder anderen Materialien gebildet. Dadurch wird beispielsweise der technische Vorteil erreicht, dass der Halterahmen mit einer hohen Stabilität gefertigt werden kann.

Ausführungsbeispiele der Erfindung sind in den Zeichnungen dargestellt und werden im Folgenden näher beschrieben.

Es zeigen:
- Fig. 1: eine perspektivische Ansicht und eine Seitenansicht der Batteriehalteeinrichtung;
- Fig. 2: unterschiedliche Aufsichten auf die Batteriehalteeinrichtung;
- Fig. 3: mehrere Seitenansichten der Batteriehalteeinrichtung mit unterschiedlich montierter Spanneinrichtung; und
- Fig. 4: zwei perspektivische Ansichten auf eine weitere Ausführungsform der Batteriehalteeinrichtung.

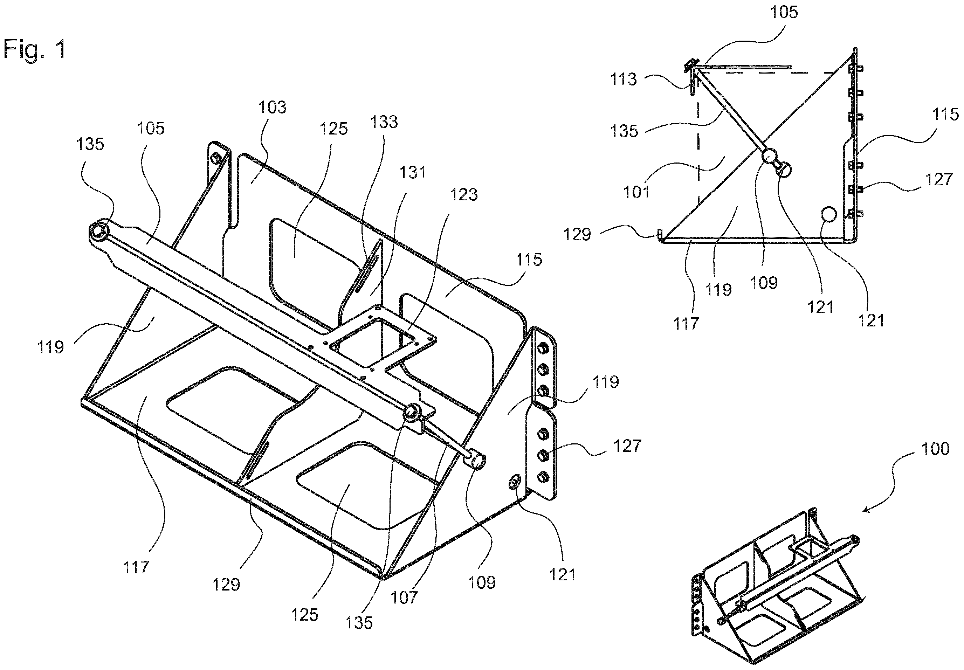

Fig. 1 zeigt eine perspektivische Ansicht und eine Seitenansicht der Batteriehalteeinrichtung 100. Die Batteriehalteeinrichtung 100 dient zum Aufnehmen einer oder mehreren schweren quaderförmigen Batterie 101, wie beispielsweise einem Bleiakkumulator und stellt eine Befestigungsmöglichkeit für Batterien 101 unterschiedlicher Größe bereit.

Die Batteriehalteeinrichtung 100 umfasst einen Halterahmen 103, einen Haltewinkel 105 und eine Spanneinrichtung 107 zum Einspannen der Batterie 101 zwischen dem Halterahmen 103 und dem Haltewinkel 105.

Der Halterahmen 103 ist beispielsweise aus einem gebogenen Metall- oder Blechteil gebildet. Der Haltrahmen 103 ist aus einer zusammenhängenden Blechplatte gefaltet. Dadurch ergibt sich eine hohe Stabilität des Halterahmens 103. Zum Schutz vor Korrosion kann der Halterahmen 103 mit einer Korrosionsschutzschicht versehen sein, beispielsweise aus Zink.

Der Halterahmen 103 ist für eine Wand- und Bodenmontage geeignet. Der Halterahmen 103 umfasst eine Rückwand 115 und eine Bodenwand 117, die senkrecht zueinander angeordnet sind. Eine rechte und eine linke dreieckförmige Seitenwand 119 verbinden die Rückwand 115 und die Bodenwand 117, so dass Kräfte von der Bodenwand 117 diagonal auf die Rückwand 115 übertragen werden können. In der Mitte zwischen der rechten und der linken Seitenwand 119 ist ein dreiecksförmiger Mittelteil 131 eingesetzt, so dass ein rechtes und ein linkes Aufnahmefach für eine Batterien 101 gebildet werden.

In dem Mittelteil 131 sind Befestigungsöffnungen 133 als Befestigungsmöglichkeit für Kabelbinder gebildet, so dass Kabel oder Leitungen der Batterie 101 oder einer Batterieelektronik mit Kabelbindern an dem Halterahmen 103 befestigt werden können. In der Bodenwand 117 und der Rückwand 115 sind Fensteröffnungen 125 gebildet, so dass Material bei der Herstellung des Halterahmens 103 eingespart werden kann.

In den Seitenbereichen des Halterahmens 103 sind in den seitlich gegenüber den Seitenwänden 119 herausstehenden Abschnitten Befestigungsöffnungen 127 gebildet. Die Befestigungsöffnungen 127 können sowohl zur Verschraubung der Batteriehalteeinrichtung 100 bei einer Wandmontage als auch an einem Boden bei einer Bodenmontage verwendet werden.

In den Seitenwänden 119 sind mehrere Einsatzöffnungen 121 zum Einsetzen der Spanneinrichtung 107 gebildet. An der Vorderseite umfasst der Halterahmen 103 eine senkrecht abgebogene Einsetzleiste 129, die ein Herausgleiten der Batterie 101 vor der Montage des Haltewinkels 105 verhindert. Die Einsetzleiste 129 erstreckt sich über die gesamte Breite des Halterahmens 103.

Der Haltewinkel 105 dient zum Befestigen der Batterie 101 in dem Halterahmen 103. Der Haltewinkel 105 wird durch eine Schiene gebildet, die ein senkrechtes Winkelprofil aufweist und sich über eine gesamte Breite des Halterahmens 103 erstreckt. Zum Tausch der Batterie 101 kann der Haltewinkel 105 nach Oben oder Unten geschwenkt werden, so dass dieser nicht vollständig demontiert werden muss. Ein Mittelabschnitt des Haltewinkels 105 weist eine größere Breite als die Breite der Seitenabschnitte auf. Daneben umfasst der Haltewinkel 105 einen Fensterabschnitt 123 als Befestigungsmöglichkeit für eine Batterieelektronik. Die Batterieelektronik wird beispielsweise auf den Fensterabschnitt 123 befestigt.

Die Spanneinrichtung 107 umfasst zwei Quergewindebolzen 109 und zwei Sechskantschrauben 135, um den Haltewinkel 105 am Halterahmen 103 zu befestigen. Der Quergewindebolzen 109 ist drehbar in einer der Einsetzöffnungen 121 in der Seitenwand 119 eingesetzt und befestigt. Die Einsetzöffnungen 121 umfassen beispielsweise ein Innengewinde zum Einschrauben des Quergewindebolzens 109. In einer weiteren Ausführungsform kann auf das Innengewinde zum Einschrauben des Quergewindebolzens 109 verzichtet werden.

Ein drehbar gelagerter Abschnitt des Quergewindebolzens 109 ragt senkrecht aus der Seitenwand 119 heraus. In diesem Abschnitt des Quergewindebolzens 109 ist eine Öffnung mit einem Innengewinde gebildet.

Der Haltewinkel 105 wird mittels der Sechskantschrauben 135 mit einem Außengewinde befestigt, das in das Innengewinde des Quergewindebolzens 109 eingeschraubt ist. Durch den drehbar gelagerten Quergewindebolzen 109 wird der Haltewinkel 105 schwenkbar an den Seitenwänden 119 des Halterahmens 103 befestigt. Durch Festziehen der Sechskantschrauben 135 wird der Haltewinkel 105 auf die Batteriekante 105 gedrückt und die Batterie 101 in der Batteriehalteeinrichtung 100 wird zwischen dem Halterahmen 103 und dem Haltewinkel 105 eingespannt.

Die so gebildete Halteinrichtung 100 weist eine hohe Festigkeit auf, die hohe Schock- und Vibrationsanforderung erfüllt.

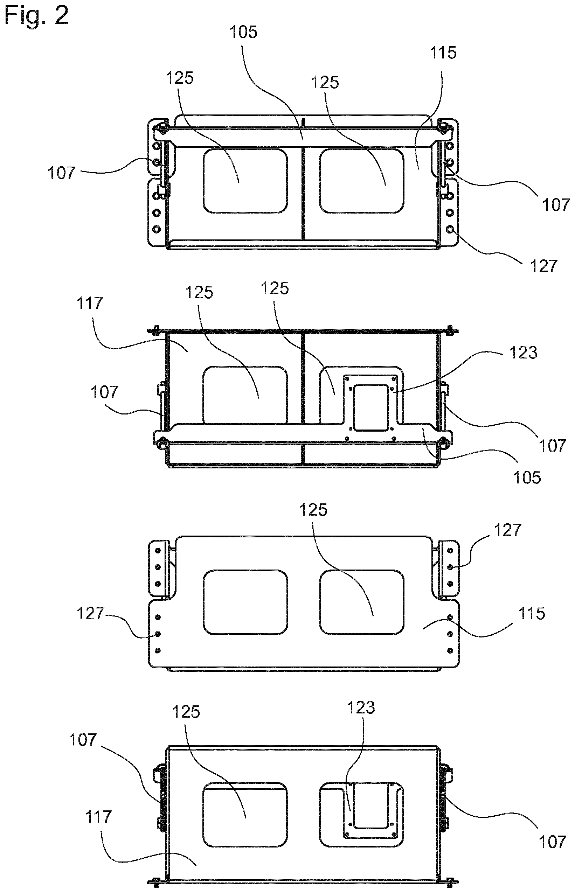

Fig. 2 zeigt eine Vorderansicht, eine Aufsicht, eine Rückansicht und eine Untersicht der Batteriehalteeinrichtung 100. Die Rückwand 115 liegt bei der Wandmontage der Halteinrichtung 100 an einer Wand an. Die Fensteröffnungen 125 bilden großflächige Ausnahmen in dem Halterahmen 103, durch die sich ein gerüstartiger Aufbau des Halterahmens 103 ergibt.

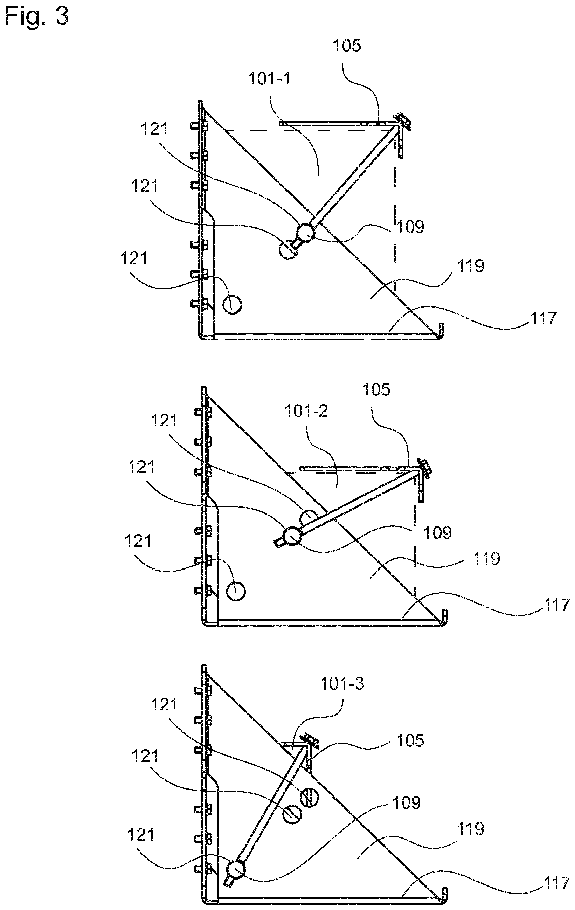

Fig. 3 zeigt mehrere Seitenansichten der Batteriehalteeinrichtung 100 mit unterschiedlich montierter Spanneinrichtung. Die Seitenwand 119 umfasst drei Einsatzöffnungen 121, die diagonal versetzt zueinander angeordnet sind. Bei einer Montage von Batterien 101-1 mit großen Abmessungen wird der Quergewindebolzen 109 in der obersten Einsatzöffnung 121 eingesetzt. Bei einer Montage von Batterien 101-2 mit mittleren Abmessungen wird der Quergewindebolzen 109 in der mittleren Einsatzöffnung 121 eingesetzt. Bei einer Montage von Batterien 101-3 mit kleinen Abmessungen wird der Quergewindebolzen 109 in der untersten Einsatzöffnung 121 eingesetzt. Dadurch lässt sich die Batteriehalteeinrichtung auf unterschiedlich große Batterien 101-1, 101-2 und 101-3 mit unterschiedlichen Abmessungen einstellen, so dass jede dieser Batterien 101-1, 101-2 und 101-3 und weitere befestigt werden können.

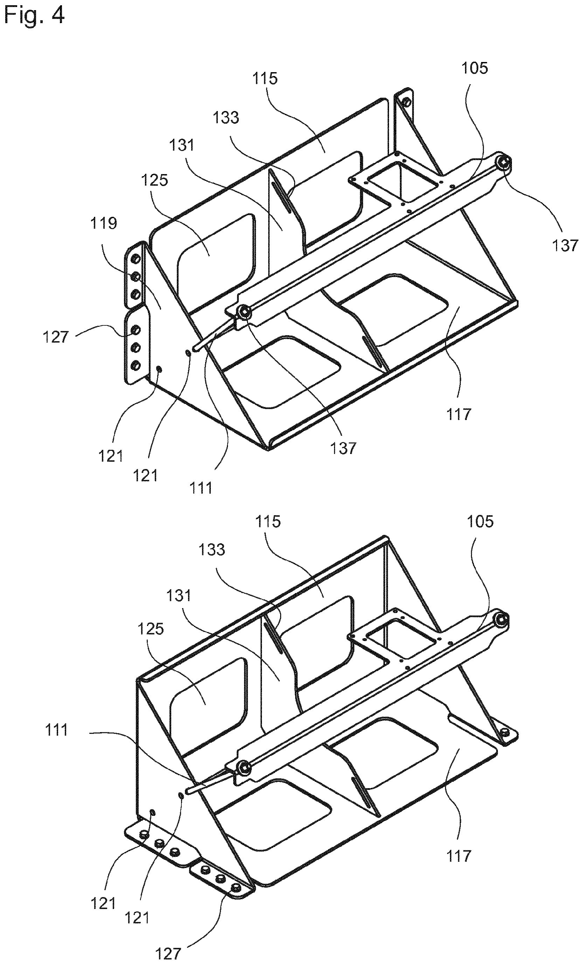

Fig. 4 zeigt zwei perspektivische Ansichten bei einer Wandmontage und einer Bodenmontage einer weiteren Ausführungsform der Batteriehalteeinrichtung 100. In dieser Ausführungsform werden statt zwei Quergewindebolzen 109 zwei Speichen 111 als Spanneinrichtung 107 zum Befestigen und Spannen des Haltewinkels 105 verwendet. Die Speichen 111 weisen ein abgebogenes Ende mit einem Kopf auf und werden je nach Größe der Batterie 101 jeweils in eine passende Einsetzöffnung 121 der Seitenwand 119 eingesetzt. Der Durchmesser der Einsetzöffnungen 121 ist an den Durchmesser der Speichen 111 angepasst, so dass der Kopf der Speichen nicht durch die Einsetzöffnungen 121 gleitet. Das abgebogene Ende der Speichen 111 befindet sich in der Einsetzöffnung 121 der Seitenwand 119 und der gerade Teil der Speichen 111 erstreckt sich parallel zu den Seitenwänden 119 nach vorne. Die Speichen 111 können sich ebenfalls in den Einsetzöffnungen 121 drehen, so dass der Haltewinkel nach Oben oder Untern geschwenkt werden kann.

Das andere Ende der Speichen 111 ist mit einem Außengewinde versehen. Das Außengewinde der Speichen 111 ist jeweils durch den Haltewinkel 105 geführt. Der Haltewinkel 105 wird über Muttern 137 auf die Kante einer eingesetzten Batterie 101 gedrückt, so dass die Batterie 101 zwischen dem Halterahmen 103 und dem Haltewinkel 105 eingespannt werden kann.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Batteriehalteeinrichtung
- 101: Batterie
- 101-1: Batterie
- 101-2: Batterie
- 101-3: Batterie
- 103: Halterahmen
- 105: Haltewinkel
- 107: Spanneinrichtung
- 109: Quergewindebolzen
- 111: Speiche
- 113: Schraubgewinde
- 115: Rückwand
- 117: Bodenwand
- 119: Seitenwand
- 121: Einsatzöffnung
- 123: Fensterabschnitt
- 125: Fensteröffnungen
- 127: Befestigungsöffnungen
- 129: Einsetzleiste
- 131: Mittelteil
- 133: Befestigungsöffnung
- 135: Schraube
- 137: Mutter

## Patentansprüche

1. Batteriehalteeinrichtung (100) für eine oder mehrere Batterien (101) mit einem Halterahmen (103) zum Einsetzen der Batterie (101), einem Haltewinkel (105), der auf eine Kante der Batterie (101) aufsetzbar ist, und einer Spanneinrichtung (107) zum Einspannen der Batterie (101) zwischen dem Halterahmen (103) und dem Haltewinkel (105);
**dadurch gekennzeichnet, dass** die Spanneinrichtung (107) einen Quergewindebolzen (109) umfasst, der drehbar an dem Halterahmen (103) befestigt ist.

2. Batteriehalteeinrichtung (100) nach einem der vorangehenden Ansprüche, wobei die Spanneinrichtung (107) eine Speiche (111) umfasst, die an dem Halterahmen (103) befestigt ist.

3. Batteriehalteeinrichtung (100) nach Anspruch 1 oder 2, wobei der Quergewindebolzen (109) oder die Speiche (111) ein Schraubgewinde (113) zum Einspannen der Batterie (101) umfasst.

4. Batteriehalteeinrichtung (100) nach einem der vorangehenden Ansprüche, wobei der Halterahmen (103) eine Rückwand (115) und eine Bodenwand (117) umfasst.

5. Batteriehalteeinrichtung (100) nach Anspruch 4, wobei die Rückwand (115) und die Bodenwand (117) in einem rechten Winkel zueinander angeordnet sind.

6. Batteriehalteeinrichtung (100) nach einem der Ansprüche 4 oder 5, wobei die Rückwand (115) und die Bodenwand (117) durch eine rechte und eine linke Seitenwand (119) miteinander verbunden sind.

7. Batteriehalteeinrichtung (100) nach Anspruch 6, wobei in den Seitenwänden (119) eine Einsatzöffnung (121) zum Einsetzen der Spanneinrichtung (107) gebildet ist.

8. Batteriehalteeinrichtung (100) nach Anspruch 6 oder 7, wobei in den Seitenwänden (119) jeweils mehrere Einsatzöffnungen (121) zum Einsetzen der Spanneinrichtung (105) und Einspannen von Batterien (101) unterschiedlicher Größe gebildet sind.

9. Batteriehalteeinrichtung (100) nach einem der vorangehenden Ansprüche, wobei der Haltewinkel (105) einen Fensterabschnitt (123) zum Befestigen einer Batterieelektronik umfasst.

10. Batteriehalteeinrichtung (100) nach einem der vorangehenden Ansprüche, wobei der Haltewinkel (105) schwenkbar mittels der Spanneinrichtung (107) an dem Halterahmen (103) befestigt ist.

11. Batteriehalteeinrichtung (100) nach einem der vorangehenden Ansprüche, wobei der Halterahmen (103) Fensteröffnungen (125) umfasst.

12. Batteriehalteeinrichtung (100) nach einem der vorangehenden Ansprüche, wobei die Batteriehalteeinrichtung (100) Befestigungsöffnungen (127) zum Befestigen der Batteriehalteeinrichtung (100) an einer Wand oder an einem Boden umfasst.

13. Batteriehalteeinrichtung (100) nach Anspruch 12, wobei die Befestigungsöffnungen (127) im Seitenbereich einer Rückwand (115) gebildet sind.

14. Batteriehalteeinrichtung (100) nach einem der vorangehenden Ansprüche, wobei der Halterahmen (103) und/oder der Haltewinkel (105) aus Metall gebildet sind.

## Claims

1. Battery retaining device (100) for one or more batteries (101) comprising a retaining frame (103) for inserting the battery (101), a retaining bracket (105), which is placeable on an edge of the battery (101), and a clamping device (107) for clamping the battery (101) between the retaining frame (103) and the retaining bracket (105);
**characterized in that** the clamping device (107) comprises a transverse threaded bolt (109), which is fixed rotatably onto the retaining frame (103).

2. Battery retaining device (100) according to any one of the preceding claims, wherein the clamping device (107) comprises a spoke (111), which is fixed onto the retaining frame (103).

3. Battery retaining device (100) according to claim 1 or 2, wherein the transverse threaded bolt (109) or the spoke (111) comprises a screw thread (113) for clamping the battery (101).

4. Battery retaining device (100) according to any one of the preceding claims, wherein the retaining frame (103) comprises a back wall (115) and a bottom wall (117).

5. Battery retaining device (100) according to claim 4, wherein the back wall (115) and the bottom wall (117) are arranged at a right angle to each other.

6. Battery retaining device (100) according to claim 4 or 5, wherein the back wall (115) and the bottom wall (117) are connected to each other by a right and a left side wall (119).

7. Battery retaining device (100) according to claim 6, wherein in the side walls (119) an insertion opening (121) is formed for inserting the clamping device (107).

8. Battery retaining device (100) according to claim 6 or 7, wherein in the side walls (119) a plurality of insertion openings (121) are formed respectively for inserting the clamping device (105) and clamping batteries (101) of different sizes.

9. Battery retaining device (100) according to any one of the preceding claims, wherein the retaining bracket (105) comprises a window section (123) for fixing a battery electronic system.

10. Battery retaining device (100) according to any one of the preceding claims, wherein the retaining bracket (105) is fixed rotatably onto the retaining frame (103) by means of the clamping device (107).

11. Battery retaining device (100) according to any one of the preceding claims, wherein the retaining frame (103) comprises window openings (125).

12. Battery retaining device (100) according to any one of the preceding claims, wherein the battery retaining device (100) comprises fixing openings (127) for fixing the battery retaining device (100) onto a wall or onto a floor.

13. Battery retaining device (100) according to 12, wherein the fixing openings (127) are formed in the side region of a back wall (115).

14. Battery retaining device (100) according to any one of the preceding claims, wherein the retaining frame (103) and/or the retaining bracket (105) are formed of metal.

## Revendications

1. Dispositif de support de batterie (100) pour une ou plusieurs batteries (101) comportant un cadre de support (103) pour insérer la batterie (101), une cornière de maintien (105), qui peut être placée sur un bord de la batterie (101), et un dispositif de serrage (107) pour serrer la batterie (101) entre le cadre de support (103) et la cornière de maintien (105);
**caractérisé en ce que**
le dispositif de serrage (107) comporte un boulon fileté transversal (109), qui est fixé de façon mobile en rotation sur le cadre de support (103).

2. Dispositif de support de batterie (100) selon l'une des revendications précédentes, dans lequel le dispositif de serrage (107) comporte un rayon (111), qui est fixé sur le cadre de support (103).

3. Dispositif de support de batterie (100) selon la revendication 1 ou 2, dans lequel le boulon fileté transversal (109) ou le rayon (111) comporte un filetage (113) pour serrer la batterie (101).

4. Dispositif de support de batterie (100) selon l'une des revendications précédentes, dans lequel le cadre de support (103) comporte une paroi arrière (115) et une paroi de fond (117).

5. Dispositif de support de batterie (100) selon la revendication 4, dans lequel la paroi arrière (115) et la paroi de fond (117) sont disposées l'une par rapport à l'autre de façon à former un angle droit.

6. Dispositif de support de batterie (100) selon l'une des revendications 4 ou 5, dans lequel la paroi arrière (115) et la paroi de fond (117) sont liées l'une à l'autre par une paroi droite et une gauche (119).

7. Dispositif de support de batterie (100) selon la revendication 6, dans lequel une ouverture d'insertion (121) est formée dans les parois latérales (119) pour insérer le dispositif de serrage (107).

8. Dispositif de support de batterie (100) selon la revendication 6 ou 7, dans lequel plusieurs ouvertures d'insertion (121) sont formées respectivement dans les parois latérales (119) pour insérer le dispositif de serrage (105) et serrer les batteries (101) de différentes dimensions.

9. Dispositif de support de batterie (100) selon l'une des revendications précédentes, dans lequel la cornière de maintien (105) comporte une partie fenêtre (123) pour fixer des dispositifs électroniques de batterie.

10. Dispositif de support de batterie (100) selon l'une des revendications précédentes, dans lequel la cornière de maintien (105) est fixée sur le cadre de support (103) de façon pivotante au moyen du dispositif de serrage (107).

11. Dispositif de support de batterie (100) selon l'une des revendications précédentes, dans lequel le cadre de support (103) comporte des ouvertures fenêtre (125).

12. Dispositif de support de batterie (100) selon l'une des revendications précédentes, dans lequel le dispositif de support de batterie (100) comporte des ouvertures de fixation (127) pour fixer le dispositif de support de batterie (100) à une paroi ou à un fond.

13. Dispositif de support de batterie (100) selon la revendication 12, dans lequel des ouvertures de fixation (127) sont formées dans une région latérale d'une paroi arrière (115).

14. Dispositif de support de batterie (100) selon l'une des revendications précédentes, dans lequel le cadre de support (103) et/ou la cornière de maintien (105) sont réalisés en métal.
